# EUROPEAN PATENT APPLICATION

(11) **EP 4 557 800 A1**
(43) Date of publication of application: **21.05.2025**
(21) Application number: 22950667.0
(22) Date of filing: 14.07.2022
(51) Int. Cl.: H04W 24/02

(54) **DATA TRANSMISSION CONFIGURATION METHOD, AND APPARATUS**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/105833
(87) International publication number: WO 2024/011546

(57) **Abstract**

Disclosed in the embodiments of the present disclosure are a data transmission configuration method, and an apparatus, which can be applied to the technical field of communications. The method executed by a terminal device comprises: receiving a first transmission configuration, which is sent by a network-side device, wherein the first transmission configuration is used for indicating transmission paths for data of a bearer, and at least two transmission paths are comprised. Therefore, data of a bearer of a terminal device supports transmission on at least two transmission paths, which can improve the reliability of data transmission.

## Description

### TECHNICAL FIELD

The present invention relates to the field of communication technology, and more particularly to a method and apparatus for data transmission configuration.

### BACKGROUND

In order to support a direct communication between terminals, a sidelink communication manner is introduced, and an interface between terminals is PC-5. According to a corresponding relationship between transmission and reception, three transmission manners are supported for the sidelink: unicast, multicast and broadcast. In the unicast connection, each terminal corresponds to one target identifier. In the multicast, each terminal may belong to one or more groups, and each group corresponds to one target identifier. In the broadcast, all terminals correspond to at least one target identifier.

In the related art, data of a bearer of the terminal may be sent to a network device directly or through a relay terminal. A transmission path of the data of the bearer of the terminal is a direct link for directly connecting the terminal to the network device or an indirect link for indirectly connecting the terminal to the network device through the relay terminal.

However, transmission of the data of the bearer of the terminal on a plurality of transmission paths is not supported, which is a problem that needs to be solved urgently.

### SUMMARY

Embodiments of the present invention provide a method and apparatus for data transmission configuration, and transmission of data of a bearer of a terminal on at least two transmission paths is supported, which may improve the reliability of data transmission.

In a first aspect, an embodiment of the present invention provides a method for data transmission configuration, which is performed by a terminal and includes: receiving a first transmission configuration sent by a network device. The first transmission configuration indicates transmission paths of data of a bearer, and the transmission paths include at least two transmission paths.

In this technical solution, the terminal receives the first transmission configuration sent by the network device. The first transmission configuration indicates the transmission paths of the data of the bearer, and the transmission paths include at least two transmission paths. Therefore, transmission of the data of the bearer of the terminal on at least two transmission paths is supported, which may improve the reliability of data transmission.

In a second aspect, an embodiment of the present invention provides another method for data transmission configuration, which is performed by a network device and includes: sending a first transmission configuration to a terminal. The first transmission configuration indicates transmission paths of data of a bearer, and the transmission paths include at least two transmission paths.

In a third aspect, an embodiment of the present invention provides a communication device, which has part or all of functions for implementing the terminal in the method according to the first aspect above. For example, the communication device may have functions as described in some or all the embodiments in the present invention, or may also have functions to separately implement any of embodiments in the present invention. The functions may be implemented by hardware, or may be implemented by executing corresponding software on the hardware. The hardware or the software includes one or more elements or modules corresponding to the above functions.

In an implementation, a structure of the communication device may include a transceiver module and a processing module, and the processing module is configured to support the communication device to perform corresponding functions in the above method. The transceiver module is configured to support a communication between the communication device and other devices. The communication device may further include a storage module, which is configured to be coupled with the transceiver module and the processing module, and store necessary computer programs and data of the communication device.

In an implementation, the communication device includes: a transceiver module configured to receive a first transmission configuration sent by a network device. The first transmission configuration indicates transmission paths of data of a bearer, and the transmission paths include at least two transmission paths.

In a fourth aspect, an embodiment of the present invention provides another communication device, which has part or all of functions for implementing the network device in the method examples according to the second aspect described above. For example, the communication device may have functions as described in some or all of the embodiments in the present invention, or may also have functions to separately implement any of embodiments in the present invention. The functions may be implemented by hardware, or may be implemented by executing corresponding software on the hardware. The hardware or the software includes one or more elements or modules corresponding to the above functions.

In an implementation, a structure of the communication device may include a transceiver module and a processing module, and the processing module is configured to support the communication device to perform corresponding functions in the above method. The transceiver module is configured to support a communication between the communication device and other devices. The communication device may further include a storage module, which is configured to be coupled with the transceiver module and the processing module, and store computer programs and data of the communication device.

In an implementation, the communication device includes: a transceiver module configured to send a first transmission configuration to a terminal. The first transmission configuration indicates transmission paths of data of a bearer, and the transmission paths include at least two transmission paths.

In a fifth aspect, an embodiment of the present invention provides a communication device, which includes a processor. When the processor invokes a computer program in a memory, the method according to the first aspect described above is implemented.

In a sixth aspect, an embodiment of the present invention provides a communication device, which includes a processor. When the processor invokes a computer program in a memory, the method according to the second aspect described above is implemented.

In a seventh aspect, an embodiment of the present invention provides a communication device, which includes a processor and a memory having stored therein a computer program. The processor is configured to execute the computer program stored in the memory, to cause the communication device to implement the method according to the first aspect described above.

In an eighth aspect, an embodiment of the present invention provides a communication device, which includes a processor and a memory having stored therein a computer program. The processor is configured to execute the computer program stored in the memory, to cause the communication device to implement the method according to the second aspect described above.

In a ninth aspect, an embodiment of the present invention provides a communication device, which includes a processor and an interface circuit. The interface circuit is configured to receive a code instruction and transmit the code instruction to the processor, and the processor is configured to run the code instruction to cause the device to implement the method according to the first aspect described above.

In a tenth aspect, an embodiment of the present invention provides a communication device, which includes a processor and an interface circuit. The interface circuit is configured to receive a code instruction and transmit the code instruction to the processor, and the processor is configured to run the code instruction to cause the device to implement the method according to the second aspect described above.

In an eleventh aspect, an embodiment of the present invention provides a random access system, which includes the communication device according to the third aspect and the communication device according to the fourth aspect, or includes the communication device according to the fifth aspect and the communication device according to the sixth aspect, or includes the communication device according to the seventh aspect and the communication device according to the eighth aspect, or includes the communication device according to the ninth aspect and the communication device according to the tenth aspect.

In a twelfth aspect, an embodiment of the present invention provides a computer-readable storage medium for storing instructions used by the above terminal. The instructions, when executed, cause the terminal to implement the method according to the first aspect described above.

In a thirteenth aspect, an embodiment of the present invention provides a readable storage medium for storing instructions used by the above network device. The instructions, when executed, cause the network device to implement the method according to the second aspect described above.

In a fourteenth aspect, the present invention further provides a computer program product, which includes a computer program that, when run on a computer, causes the computer to implement the method according to the first aspect described above.

In a fifteenth aspect, the present invention further provides a computer program product, which includes a computer program that, when run on a computer, causes the computer to implement the method according to the second aspect described above.

In a sixteenth aspect, the present invention provides a chip system, which includes at least one processor and an interface, for supporting a terminal to implement functions involved in the first aspect, for example, determining or processing at least one of data and information involved in the above method. In a possible design, the chip system further includes a memory for storing computer programs and data necessary for the terminal. The chip system may consist of chips, or may include chips and other discrete devices.

In a seventeenth aspect, the present invention provides a chip system, which includes at least one processor and an interface, for supporting a network device to implement functions involved in the second aspect, for example, determining or processing at least one of data and information involved in the above method. In a possible design, the chip system further includes a memory for storing computer programs and data necessary for the network device. The chip system may consist of chips, or may include chips and other discrete devices.

In an eighteenth aspect, the present invention provides a computer program that, when run on a computer, causes the computer to implement the method according to the first aspect described above.

In a nineteenth aspect, the present invention provides a computer program that, when run on a computer, causes the computer to implement the method according to the second aspect described above.

### BRIEF DESCRIPTION OF THE DRAWINGS

In order to clearly illustrate the technical solutions in the embodiments of the present invention or in the related art, drawings to be used for the description of the embodiments of the present invention or the related art are described below.
FIG. 1 is a block diagram of an architecture of a communication system according to embodiments of the present invention;
FIG. 2 is a flow chart of a method for data transmission configuration according to an embodiment of the present invention;
FIG. 3 is a flow chart of another method for data transmission configuration according to an embodiment of the present invention;
FIG. 4 is a flow chart of yet another method for data transmission configuration according to an embodiment of the present invention;
FIG. 5 is a flow chart of yet another method for data transmission configuration according to an embodiment of the present invention;
FIG. 6 is a flow chart of yet another method for data transmission configuration according to an embodiment of the present invention;
FIG. 7 is a flow chart of yet another method for data transmission configuration according to an embodiment of the present invention;
FIG. 8 is a flow chart of yet another method for data transmission configuration according to an embodiment of the present invention;
FIG. 9 is a flow chart of yet another method for data transmission configuration according to an embodiment of the present invention;
FIG. 10 is a block diagram of a communication device according to an embodiment of the present invention;
FIG. 11 is a block diagram of another communication device according to an embodiment of the present invention; and
FIG. 12 is a schematic block diagram of a chip according to an embodiment of the present invention.

### DETAILED DESCRIPTION

In order to better understand a method and apparatus for data transmission configuration described in embodiments of the present invention, a communication system to which embodiments of the present invention are applicable is firstly described below.

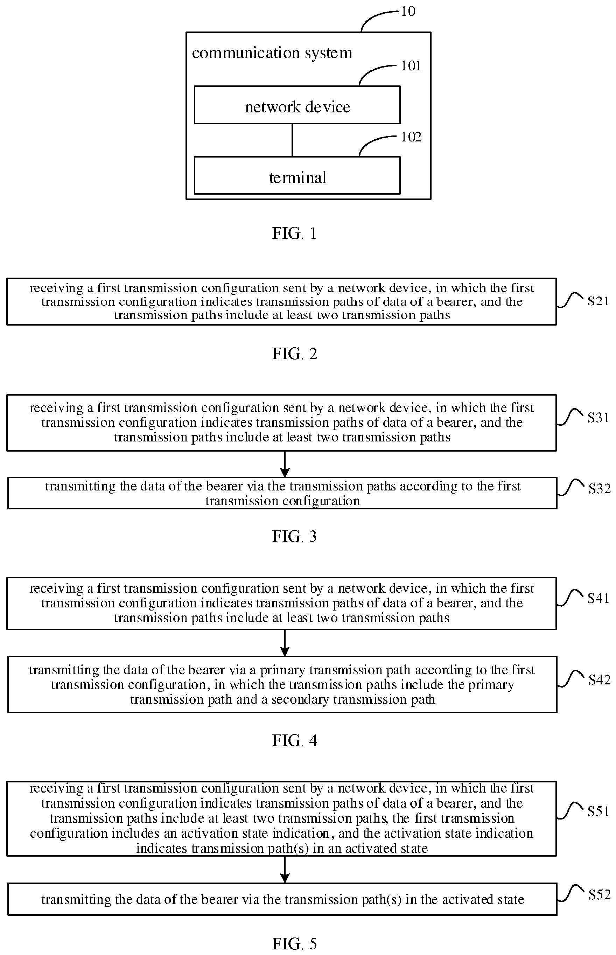

FIG. 1 is a schematic diagram of an architecture of a communication system according to embodiments of the present invention. Referring to FIG. 1, the communication system may include, but is not limited to, one network device and one terminal. The number and forms of the devices shown in FIG. 1 are only used as an example and do not constitute a limitation on embodiments of the present invention. The communication system may include two or more network devices and two or more terminals in practical applications. As an example for illustration, the communication system 10 shown in FIG. 1 includes one network device 101 and one terminal 102.

It should be noted that the technical solutions of embodiments of the present invention may be applied to various communication systems, for example, a long term evolution (LTE) system, a 5th generation (5G) mobile communication system, a 5G new radio (NR) system, or other future new mobile communication systems. It should also be noted that the sidelink in embodiments of the present invention may also be called a side link or a direct communication link.

The network device 101 in embodiments of the present invention is an entity at a network side for sending or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (Wi-Fi) system. The specific technology and specific device form adopted by the base station are not limited in embodiments of the present invention. The base station according to embodiments of the present invention may be composed of a central unit (CU) and distributed units (DU). The CU may also be called a control unit. Using the CU-DU structure allows to split the base station, such as protocol layers of the base station, so that functions of some of the protocol layers are centrally controlled in the CU, functions of some or all of the remaining protocol layers are distributed in the DUs, and the CU centrally controls the DUs.

The terminal 102 in embodiments of the present invention is an entity at a user side for receiving or sending signals, such as a mobile phone. The terminal may also be called a terminal device, a user equipment (UE), a mobile station (MS), a mobile terminal (MT), and so on. The terminal may be a device with a communication function, such as a car, a smart car, a mobile phone, a wearable device, a tablet Pad, a computer with a wireless transceiver function, a virtual reality (VR) terminal, an augmented reality (AR) terminal, a wireless terminal in an industrial control, a wireless terminal in a self-driving, a wireless terminal in a remote medical surgery, a wireless terminal in a smart grid, a wireless terminal in a transportation safety, a wireless terminal in a smart city, a wireless terminal in a smart home, etc. The specific technology and the specific device form adopted by the terminal are not limited in embodiments of the present invention.

It may be understood that the communication system described in embodiments of the present invention is intended to illustrate the technical solutions of embodiments of the present invention more clearly, and does not constitute a limitation on the technical solutions according to embodiments of the present invention. Those of ordinary skill in the art will know that with an evolution of a system architecture and an emergence of a new service scenario, the technical solutions according to embodiments of the present invention are also applicable to similar technical problems.

A method and apparatus for data transmission configuration according to the present invention will be described in detail below with reference to the accompanying drawings.

Referring to FIG. 2, FIG. 2 is a flow chart of a method for data transmission configuration according to an embodiment of the present invention.

As shown in FIG. 2, the method is performed by a terminal and may include, but is not limited to, a following step.

In S21, a first transmission configuration sent by a network device is received. The first transmission configuration indicates transmission paths of data of a bearer, and the transmission paths include at least two transmission paths.

In an embodiment of the present invention, the terminal receives the first transmission configuration sent by the network device, the first transmission configuration indicates the transmission paths of the data of the bearer, the transmission paths include at least two transmission paths, and the data transmitted by the two transmission paths come from the same bearer, which are repeated transmissions.

In an embodiment of the present invention, the transmission paths may be indicated by a radio link control (RLC) entity.

In the related art, a terminal may communicate with a network device through the relay of another terminal instead of directly connecting to the network device, the terminal that is not connected to the network device is called a remote terminal (also called a remote user equipment), and the terminal that provides the relay function is called a relay terminal (also called a relay user equipment). The remote user equipment communicates with the relay user equipment via a sidelink unicast, and this architecture is called a UE to network (U2N) relay.

A direct connection between the terminal and the network device is called a direct link, and a connection between the terminal and the network device via a relay terminal is called an indirect link.

In embodiments of the present invention, to address a problem in the related art that the transmission path of the data of the bearer of the terminal is the direct link or the indirect link, the transmission path is one of the direct link and the indirect link, and the terminal does not support transmission of the data of the bearer on a plurality of transmission paths, a method for data transmission configuration is provided. The network device sends the first transmission configuration to the terminal, the first transmission configuration indicates the transmission paths of the data of the bearer, and the transmission paths include at least two transmission paths. Therefore, transmission of the data of the bearer of the terminal on at least two transmission paths is supported, which may improve the reliability of data transmission.

The at least two transmission paths may include a direct link in which the terminal is directly connected to the network device, and an indirect link in which the terminal is connected to the network device via a relay terminal. Therefore, the data of the bearer of the terminal may be transmitted via both the direct link and the indirect link, which may improve the reliability of data transmission.

In order to improve the reliability of data transmission, the network device may configure a plurality of transmission paths for a radio bearer of the terminal, and configure a plurality of RLC entities for data from a certain package data convergence protocol (PDCP) entity. The transmission path may be determined via a cell group (a master cell group (MCG) or a secondary cell group (SCG)) and a logical channel identifier.

The above configurations of the network device may be carried in PDCP-Config and is indicated by moreThanOneRLC and moreThanTwoRLC-DRB-r16.

Configuration information of the PDCP-Config is as follows:
The IE PDCP-Config is used to set the configurable PDCP parameters for signalling, MBS multicast and data radio bearers.
PDCP-Config information element

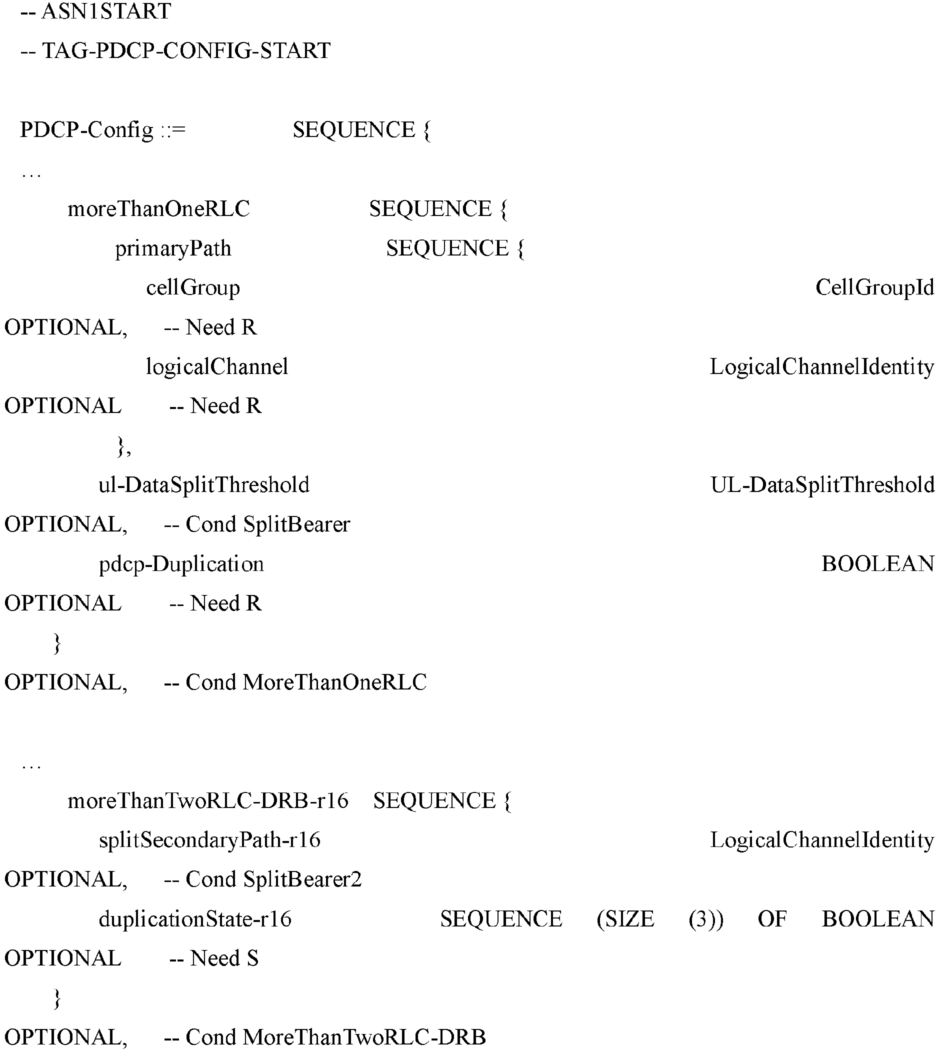

In an embodiment of the present invention, the terminal receives the first transmission configuration sent by the network device, the first transmission configuration indicates the transmission paths of the data of the bearer, and the transmission paths include at least two transmission paths. The transmission paths include the direct link in which the terminal is directly connected to the network device, and the indirect link in which the terminal is connected to the network device via the relay terminal. Therefore, the terminal supports repeated transmissions of the data of the bearer on the plurality of transmission paths, and may also transmit the data on the direct link and the indirect link at the same time, which may improve the reliability of data transmission.

In some embodiments, the bearer is a data radio bearer (DRB) and/or a signaling radio bearer (SRB).

In an embodiment of the present invention, the first transmission configuration indicates at least two transmission paths of data of the DRB, or the first transmission configuration indicates at least two transmission paths of data of the SRB.

The first transmission configuration indicates at least two transmission paths of the data of the DRB, and the data transmitted in the at least two transmission paths come from the same DRB, which are repeated transmissions. The first transmission configuration indicates at least two transmission paths of the data of the SRB, and the data transmitted in the at least two transmission paths come from the same SRB, which are repeated transmissions.

In some embodiments, the transmission paths include at least one of: a sidelink relay; or a universal UE to network interface (Uu).

The network device sends the first transmission configuration to the terminal, the first transmission configuration indicates the transmission paths of the data of the bearer, the transmission paths include at least two transmission paths, and at least the sidelink relay and the Uu are included.

The sidelink relay may be an indirect link in which the terminal is connected to the network device via the relay terminal, and the Uu is a direct link in which the terminal is directly connected to the network device without via the relay terminal.

In an embodiment of the present invention, the terminal and the network device may communicate via a direct link of a communication interface. For example, the communication interface between the terminal and the network device may be the Uu. Therefore, the communication via the direct link between the terminal and the network device may also be called the Uu. The Uu also includes an uplink communication and a downlink communication.

In an embodiment of the present invention, the data of the bearer of the terminal may be repeatedly transmitted via the sidelink relay and the Uu at the same time, thereby improving the reliability of data transmission.

In some embodiments, in a case where the transmission path is the Uu, the transmission path is determined by at least one of: a cell group; a cell identifier; a logical channel identifier; or a radio link control (RLC) identifier.

In an embodiment of the present invention, the network device sends the first transmission configuration to the terminal, the first transmission configuration indicates the transmission paths of the data of the bearer, and the transmission paths include at least two transmission paths.

The terminal may determine the transmission path according to the cell group in a case where the transmission path is the Uu. The cell group includes a master cell group and a secondary cell group.

The terminal may determine the transmission path according to the cell identifier in a case where the transmission path is the Uu.

The terminal may determine the transmission path according to the logical channel identifier in a case where the transmission path is the Uu.

The terminal may determine the transmission path according to the radio link control (RLC) identifier in a case where the transmission path is the Uu.

It should be noted that the above embodiments are not exhaustive but are only illustrations of some embodiments, and the above embodiments may be implemented individually or in combination. The above embodiments are only for illustration and are not intended as specific limitations on the scope of protection of embodiments of the present invention.

In some embodiments, in a case where the transmission path is the sidelink relay, the transmission path is determined by at least one of: a relay terminal identifier; a sidelink logical channel identifier; or a sidelink RLC identifier.

In an embodiment of the present invention, the network device sends the first transmission configuration to the terminal, the first transmission configuration indicates the transmission paths of the data of the bearer, and the transmission paths include at least two transmission paths.

The terminal may determine the transmission path according to the relay terminal identifier in a case where the transmission path is the sidelink relay. The relay terminal identifier may be a layer 2 identifier of the relay terminal, or the relay terminal identifier may be an index, indicating the relay terminal at an index position according to an ascending or descending order of the layer 2 identifier of the relay terminal to which the terminal is connected.

The terminal may determine the transmission path according to the sidelink logical channel identifier in a case where the transmission path is the sidelink relay.

The terminal may determine the transmission path according to the sidelink RLC identifier in a case where the transmission path is the sidelink relay.

It should be noted that the above embodiments are not exhaustive but are only illustrations of some embodiments, and the above embodiments may be implemented individually or in combination. The above embodiments are only for illustration and are not intended as specific limitations on the scope of protection of embodiments of the present invention.

In some embodiments, the terminal receives the first transmission configuration sent by the network device, the first transmission configuration indicates the transmission paths of the data of the bearer, and the transmission paths include at least two transmission paths. The terminal transmits the data of the bearer via the transmission paths according to the first transmission configuration.

In an embodiment of the present invention, the network device sends the first transmission configuration to the terminal, the first transmission configuration indicates the transmission paths of the data of the bearer, and the transmission paths include at least two transmission paths. After the terminal receives the first transmission configuration sent by the network device, the terminal may determine at least two transmission paths of the data of the bearer according to the first transmission configuration. Based on this, the data of the bearer may be transmitted via the at least two transmission paths determined, or the data of the bearer may be transmitted via one of the at least two transmission paths determined, etc.

Therefore, in embodiments of the present invention, the terminal may transmit the data of the bearer via a plurality of transmission paths, which may improve the reliability of data transmission.

In some embodiments, the transmission paths include a primary transmission path and a secondary transmission path, and transmitting the data of the bearer via the transmission paths according to the first repeated transmission configuration includes: transmitting the data of the bearer via the primary transmission path according to the first transmission configuration.

In an embodiment of the present invention, the network device sends the first transmission configuration to the terminal, the first transmission configuration indicates the transmission paths of the data of the bearer, and the transmission paths include at least two transmission paths. After the terminal receives the first transmission configuration sent by the network device, the terminal may determine at least two transmission paths of the data of the bearer according to the first transmission configuration, and the at least two transmission paths include the primary transmission path and the secondary transmission path. Based on this, the terminal may transmit the data of the bearer via the primary transmission path according to the first transmission configuration, thereby improving the reliability of data transmission.

Among the at least two transmission paths, the primary transmission path and the secondary transmission path may be set as needed, for example, it may be stipulated through a protocol that one of the at least two transmission paths is the primary transmission path, and the other transmission path is used as the secondary transmission path, or it may be configured by the network device that one of the at least two transmission paths is the primary transmission path, and the other transmission path is used as the secondary transmission path.

Of course, the above examples are for illustration only. Among the at least two transmission paths, the primary transmission path and the secondary transmission path may be determined according to a protocol or a configuration of the network device, or one of the primary transmission path and the secondary transmission path may be determined according to a protocol or a configuration of network device, and the other one may be automatically determined, which will not be specifically limited in embodiments of the present invention.

In a case where the transmission paths include three or more transmission paths, there may exist one primary transmission path and a plurality of secondary transmission paths. The primary transmission path may be determined according to a protocol or a configuration of the network device, and the other transmission paths are the secondary transmission paths.

In some embodiments, the terminal receives first indication information sent by the network device, and the first indication information indicates activation or deactivation of the transmission paths of the bearer.

In an embodiment of the present invention, the terminal receives the first indication information sent by the network device, and the first indication information indicates activation or deactivation of the transmission paths of the bearer. The first indication information indicates activated transmission path(s) of the bearer, or the first indication information indicates deactivated transmission path(s) of the bearer.

In some embodiments, the terminal transmits the data of the bearer via the transmission path(s) in an activated state.

In an embodiment of the present invention, on the basis that the first indication information indicates the activated transmission path(s) of the bearer, the terminal may transmit the data of the bearer via the transmission path(s) in the activated state.

In some embodiments, the first indication information is carried in at least one of: a medium access control control element (MAC CE); a radio resource control (RRC) message; a package data convergence protocol (PDCP) control protocol data unit (PDU); a sidelink MAC CE; or a sidelink RRC message.

In an embodiment of the present invention, the network device sends the first indication information to the terminal, which may be that the network device sends the MAC CE to the terminal, and the MAC CE carries the first indication information.

In an embodiment of the present invention, the network device sends the first indication information to the terminal, which may be that the network device sends the RRC message to the terminal, and the RRC message carries the first indication information.

In an embodiment of the present invention, the network device sends the first indication information to the terminal, which may be that the network device sends the PDCP control PDU to the terminal, and the PDCP control PDU carries the first indication information.

In an embodiment of the present invention, the network device sends the first indication information to the terminal, which may be that the network device sends the sidelink MAC CE to the terminal, and the sidelink MAC CE carries the first indication information.

In an embodiment of the present invention, the network device sends the first indication information to the terminal, which may be that the network device sends the sidelink RRC message to the terminal, and the sidelink RRC message carries the first indication information.

It should be noted that the above embodiments are not exhaustive but are only illustrations of some embodiments, and the above embodiments may be implemented individually or in combination. The above embodiments are only for illustration and are not intended as specific limitations on the scope of protection of embodiments of the present invention.

In some embodiments, the first indication information includes at least one of: a bearer identifier; a transmission path activation indication; or a transmission path deactivation indication.

In an embodiment of the present invention, the network device sends the first indication information to the terminal, and the first indication information indicates activation or deactivation of the transmission paths of the bearer. The bearer identifier may be sent to the terminal to indicate an activated or deactivated bearer.

In an embodiment of the present invention, the network device sends the first indication information to the terminal, and the first indication information indicates activation or deactivation of the transmission paths of the bearer. The transmission path activation indication may be sent to the terminal to indicate activation of the transmission path(s) of the bearer.

In an embodiment of the present invention, the network device sends the first indication information to the terminal, and the first indication information indicates activation or deactivation of the transmission paths of the bearer. The transmission path deactivation indication may be sent to the terminal to indicate deactivation of the transmission path(s) of the bearer.

In an embodiment of the present invention, the network device sends the first indication information to the terminal, and the first indication information indicates activation or deactivation of the transmission paths of the bearer. The bearer identifier and the transmission path activation indication may be sent to the terminal to indicate activated transmission path(s) of the bearer.

In an embodiment of the present invention, the network device sends the first indication information to the terminal, and the first indication information indicates activation or deactivation of the transmission paths of the bearer. The bearer identifier and the transmission path deactivation indication may be sent to the terminal to indicate deactivated transmission path(s) of the bearer.

The first indication information may include a bitmap, where positions of bits correspond to transmission paths one by one, a bit at a corresponding position indicates activation or deactivation, and the corresponding relationship between positions of bits and transmission paths may be the sidelink relay first and then the Uu, or vice versa. In a case where there are a plurality of logical channels or RLC channels in any path, they are arranged in an ascending or descending order of identifiers of the logical channels or the RLC channels.

It should be noted that the above embodiments are not exhaustive but are only illustrations of some embodiments, and the above embodiments may be implemented individually or in combination. The above embodiments are only for illustration and are not intended as specific limitations on the scope of protection of embodiments of the present invention.

In some embodiments, the first transmission configuration includes an activation state indication, and the activation state indication indicates the transmission path(s) in an activated state.

In an embodiment of the present invention, the first transmission configuration sent by the network device to the terminal further includes the activation state indication, and the activation state indication indicates the transmission path(s) in the activated state. The activation state indication may indicate that one of the at least two transmission paths is in the activated state. Based on this, the terminal receives the first transmission configuration sent by the network device and may determine the transmission path in the activated state.

In some embodiments, the data of the bearer is transmitted via the transmission path(s) in the activated state.

In an embodiment of the present invention, the terminal determines the transmission path(s) in the activated state according to the first transmission configuration sent by the network device, and may transmit the data of the bearer via the transmission path(s) in the activated state. Therefore, the terminal may determine the transmission paths of the data of the bearer, and transmit the data of the bearer on the transmission path(s) in the activated state, which may improve the reliability of data transmission.

Referring to FIG. 3, FIG. 3 is a flow chart of another method for data transmission configuration according to an embodiment of the present invention.

As shown in FIG. 3, the method is performed by a terminal and may include, but is not limited to, the following steps.

In S31, a first transmission configuration sent by a network device is received. The first transmission configuration indicates transmission paths of data of a bearer, and the transmission paths include at least two transmission paths.

In embodiments of the present invention, the relevant description of S31 may refer to the relevant description in the above embodiments, which will not be repeated here.

In S32, the data of the bearer is transmitted via the transmission paths according to the first transmission configuration.

In an embodiment of the present invention, the network device sends the first transmission configuration to the terminal, the first transmission configuration indicates the transmission paths of the data of the bearer, and the transmission paths include at least two transmission paths. After the terminal receives the first transmission configuration sent by the network device, the terminal may determine at least two transmission paths of the data of the bearer according to the first transmission configuration. Based on this, the data of the bearer may be transmitted via the at least two transmission paths determined, or the data of the bearer may be transmitted via one of the at least two transmission paths determined, etc.

Therefore, in embodiments of the present invention, the terminal may transmit the data of the bearer via a plurality of transmission paths, which may improve the reliability of data transmission.

It should be noted that, in embodiments of the present invention, S31 and S32 may be implemented separately or in combination with any other steps in embodiments of the present invention, for example, in combination with S21 in embodiments of the present invention, which is not limited in embodiments of the present invention.

By implementing embodiments of the present invention, the terminal receives the first transmission configuration sent by the network device, the first transmission configuration indicates the transmission paths of the data of the bearer, the transmission paths include at least two transmission paths, and the data of the bearer is transmitted via the transmission paths according to the first transmission configuration. Therefore, the terminal may transmit the data of the bearer via the plurality of transmission paths, which may improve the reliability of data transmission.

Referring to FIG. 4, FIG. 4 is a flow chart of yet another method for data transmission configuration according to an embodiment of the present invention.

As shown in FIG. 4, the method is performed by a terminal and may include, but is not limited to, the following steps.

In S41, a first transmission configuration sent by a network device is received. The first transmission configuration indicates transmission paths of data of a bearer, and the transmission paths include at least two transmission paths.

In embodiments of the present invention, the relevant description of S41 may refer to the relevant description in the above embodiments, which will not be repeated here.

In S42, the data of the bearer is transmitted via a primary transmission path according to the first transmission configuration. The transmission paths include the primary transmission path and a secondary transmission path.

In an embodiment of the present invention, the network device sends the first transmission configuration to the terminal, the first transmission configuration indicates the transmission paths of the data of the bearer, and the transmission paths include at least two transmission paths. After the terminal receives the first transmission configuration sent by the network device, the terminal may determine at least two transmission paths of the data of the bearer according to the first transmission configuration, and the at least two transmission paths include the primary transmission path and the secondary transmission path. Based on this, the terminal may transmit the data of the bearer via the primary transmission path according to the first transmission configuration, thereby improving the reliability of data transmission.

Among the at least two transmission paths, the primary transmission path and the secondary transmission path may be set as needed, for example, it may be stipulated through a protocol that one of the at least two transmission paths is the primary transmission path, and the other transmission path is used as the secondary transmission path, or it may be configured by the network device that one of the at least two transmission paths is the primary transmission path, and the other transmission path is used as the secondary transmission path.

Of course, the above examples are for illustration only. Among the at least two transmission paths, the primary transmission path and the secondary transmission path may be determined according to a protocol or a configuration of the network device, or one of the primary transmission path and the secondary transmission path may be determined according to a protocol or a configuration of network device, and the other one may be automatically determined, which will not be specifically limited in embodiments of the present invention..

In a case where the transmission paths include three or more transmission paths, there may exist one primary transmission path and a plurality of secondary transmission paths. The primary transmission path may be determined according to a protocol or a configuration of the network device, and the other transmission paths are the secondary transmission paths.

It should be noted that, in embodiments of the present invention, S41 and S42 may be implemented separately or in combination with any other steps in embodiments of the present invention, for example, in combination with S21 and/or S31 and S32 in embodiments of the present invention, which is not limited in embodiments of the present invention.

By implementing embodiments of the present invention, the terminal receives the first transmission configuration sent by the network device, the first transmission configuration indicates the transmission paths of the data of the bearer, and the transmission paths include at least two transmission paths. The data of the bearer is transmitted via the primary transmission path according to the first transmission configuration, and the transmission paths include the primary transmission path and the secondary transmission path. Therefore, the terminal may transmit the data of the bearer via the plurality of transmission paths, which may improve the reliability of data transmission.

Referring to FIG. 5, FIG. 5 is a flow chart of yet another method for data transmission configuration according to an embodiment of the present invention.

As shown in FIG. 5, the method is performed by a terminal and may include, but is not limited to, the following steps.

In S51, a first transmission configuration sent by a network device is received. The first transmission configuration indicates transmission paths of data of a bearer, the transmission paths include at least two transmission paths, the first transmission configuration includes an activation state indication, and the activation state indication indicates the transmission path(s) in an activated state.

In embodiments of the present invention, the relevant description of S51 may refer to the relevant description in the above embodiments, which will not be repeated here.

In an embodiment of the present invention, the first transmission configuration sent by the network device to the terminal further includes the activation state indication, and the activation state indication indicates the transmission path(s) in the activated state. The activation state indication may indicate that one of the at least two transmission paths is in the activated state. Based on this, the terminal receives the first transmission configuration sent by the network device and may determine the transmission path in the activated state.

In S52, the data of the bearer is transmitted via the transmission path(s) in an activated state.

In an embodiment of the present invention, the terminal determines the transmission path(s) in the activated state according to the first transmission configuration sent by the network device, and may transmit the data of the bearer via the transmission path(s) in the activated state. Therefore, the terminal may determine the transmission paths of the data of the bearer, and transmit the data of the bearer on the transmission path(s), which may improve the reliability of data transmission.

It should be noted that, in embodiments of the present invention, S51 and S52 may be implemented separately or in combination with any other steps in embodiments of the present invention, for example, in combination with S21 and/or S31 and S32 and/or S41 and S42 in embodiments of the present invention, which is not limited in embodiments of the present invention.

By implementing embodiments of the present invention, the terminal receives the first transmission configuration sent by the network device, the first transmission configuration indicates the transmission paths of the data of the bearer, and the transmission paths include at least two transmission paths. The first transmission configuration includes the activation state indication, the activation state indication indicates the transmission path(s) in the activated state, and the data of the bearer is transmitted via the transmission path(s) in the activated state. Therefore, transmission of the data of the bearer of the terminal on at least two transmission paths is supported, and transmission of the data of the bearer of the terminal on the transmission path(s) in the activated state is supported, which may improve the reliability of data transmission.

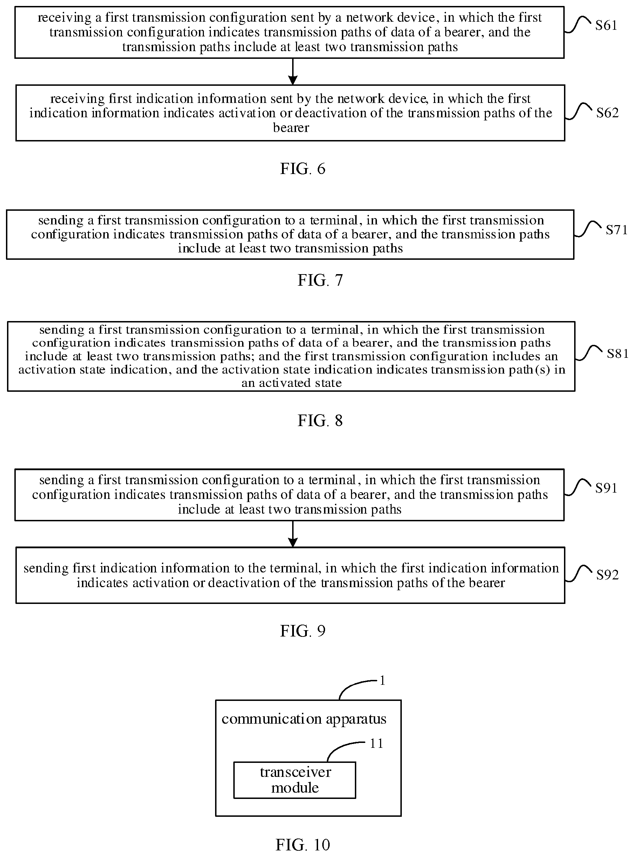

Referring to FIG. 6, FIG. 6 is a flow chart of yet another method for data transmission configuration according to an embodiment of the present invention.

As shown in FIG. 6, the method is performed by a terminal and may include, but is not limited to, the following steps.

In S61, a first transmission configuration sent by a network device is received. The first transmission configuration indicates transmission paths of data of a bearer, and the transmission paths include at least two transmission paths.

In embodiments of the present invention, the relevant description of S61 may refer to the relevant description in the above embodiments, which will not be repeated here.

In S62, first indication information sent by the network device is received. The first indication information indicates activation or deactivation of the transmission paths of the bearer.

In an embodiment of the present invention, the terminal receives the first indication information sent by the network device, and the first indication information indicates activation or deactivation of the transmission paths of the bearer. The first indication information indicates activated transmission path(s) of the bearer, or the first indication information indicates deactivated transmission path(s) of the bearer.

In some embodiments, the first indication information is carried in at least one of: a medium access control control element (MAC CE); a radio resource control (RRC) message; a package data convergence protocol (PDCP) control PDU; a sidelink MAC CE; or a sidelink RRC message.

In an embodiment of the present invention, the network device sends the first indication information to the terminal, which may be that the network device sends the MAC CE to the terminal, and the MAC CE carries the first indication information.

In an embodiment of the present invention, the network device sends the first indication information to the terminal, which may be that the network device sends the RRC message to the terminal, and the RRC message carries the first indication information.

In an embodiment of the present invention, the network device sends the first indication information to the terminal, which may be that the network device sends the PDCP control PDU to the terminal, and the PDCP control PDU carries the first indication information.

In an embodiment of the present invention, the network device sends the first indication information to the terminal, which may be that the network device sends the sidelink MAC CE to the terminal, and the sidelink MAC CE carries the first indication information.

In an embodiment of the present invention, the network device sends the first indication information to the terminal, which may be that the network device sends the sidelink RRC message to the terminal, and the sidelink RRC message carries the first indication information.

It should be noted that the above embodiments are not exhaustive but are only illustrations of some embodiments, and the above embodiments may be implemented individually or in combination. The above embodiments are only for illustration and are not intended as specific limitations on the scope of protection of embodiments of the present invention.

In some embodiments, the first indication information includes at least one of: a bearer identifier; a transmission path activation indication; or a transmission path deactivation indication.

In an embodiment of the present invention, the network device sends the first indication information to the terminal, and the first indication information indicates activation or deactivation of the transmission paths of the bearer. The bearer identifier may be sent to the terminal to indicate an activated or deactivated bearer.

In an embodiment of the present invention, the network device sends the first indication information to the terminal, and the first indication information indicates activation or deactivation of the transmission paths of the bearer. The transmission path activation indication may be sent to the terminal to indicate activation of the transmission path(s) of the bearer.

In an embodiment of the present invention, the network device sends the first indication information to the terminal, and the first indication information indicates activation or deactivation of the transmission paths of the bearer. The transmission path deactivation indication may be sent to the terminal to indicate deactivation of the transmission path(s) of the bearer.

In an embodiment of the present invention, the network device sends the first indication information to the terminal, and the first indication information indicates activation or deactivation of the transmission paths of the bearer. The bearer identifier and the transmission path activation indication may be sent to the terminal to indicate activated transmission path(s) of the bearer.

In an embodiment of the present invention, the network device sends the first indication information to the terminal, and the first indication information indicates activation or deactivation of the transmission paths of the bearer. The bearer identifier and the transmission path deactivation indication may be sent to the terminal to indicate deactivated transmission path(s) of the bearer.

The first indication information may include a bitmap, where positions of bits correspond to transmission paths one by one, a bit at a corresponding position indicates activation or deactivation, and the corresponding relationship between positions of bits and transmission paths may be the sidelink relay first and then the Uu, or vice versa. In a case where there are a plurality of logical channels or RLC channels in any path, they are arranged in an ascending or descending order of identifiers of the logical channels or the RLC channels.

It should be noted that the above embodiments are not exhaustive but are only illustrations of some embodiments, and the above embodiments may be implemented individually or in combination. The above embodiments are only for illustration and are not intended as specific limitations on the scope of protection of embodiments of the present invention.

In S63, the data of the bearer is transmitted via the transmission path(s) in an activated state.

In an embodiment of the present invention, on the basis that the first indication information indicates the activated transmission path(s) of the bearer, the terminal may transmit the data of the bearer via the transmission path(s) in the activated state.

It should be noted that, in embodiments of the present invention, S61 to S63 may be implemented separately or in combination with any other steps in embodiments of the present invention, for example, in combination with S21 and/or S31 and S32 and/or S41 and S42 in embodiments of the present invention, which is not limited in embodiments of the present invention.

By implementing embodiments of the present invention, the terminal receives the first transmission configuration sent by the network device, the first transmission configuration indicates the transmission paths of the data of the bearer, and the transmission paths include at least two transmission paths. The terminal receives the first indication information sent by the network device, the first indication information indicates activation or deactivation of the transmission paths of the bearer, and the data of the bearer is transmitted via the transmission path(s) in the activated state. Therefore, the terminal may transmit the data of the bearer via the plurality of transmission paths and support transmission on the transmission path(s) in the activated state, which may improve the reliability of data transmission.

Referring to FIG. 7, FIG. 7 is a flow chart of yet another method for data transmission configuration according to an embodiment of the present invention.

As shown in FIG. 7, the method is performed by a network device and may include, but is not limited to, a following step.

In S71, a first transmission configuration is sent to a terminal. The first transmission configuration indicates transmission paths of data of a bearer, and the transmission paths include at least two transmission paths.

In an embodiment of the present invention, the network device sends the first transmission configuration to the terminal, the first transmission configuration indicates the transmission paths of the data of the bearer, and the transmission paths include at least two transmission paths. The data transmitted by the two transmission paths come from the same bearer, which are repeated transmissions.

In an embodiment of the present invention, the transmission paths may be indicated by a radio link control (RLC) entity.

In the related art, a terminal may communicate with a network device through the relay of another terminal instead of directly connecting to the network device, the terminal that is not connected to the network device is called a remote terminal (also called a remote user equipment), and the terminal that provides the relay function is called a relay terminal (also called a relay user equipment). The remote user equipment communicates with the relay user equipment via a sidelink unicast, and this architecture is called a UE to network (U2N) relay.

A direct connection between the terminal and the network device is called a direct link, and a connection between the terminal and the network device via a relay terminal is called an indirect link.

In embodiments of the present invention, to address a problem in the related art that the transmission path of the data of the bearer of the terminal is the direct link or the indirect link, the transmission path is one of the direct link and the indirect link, and the terminal does not support transmission of the data of the bearer on a plurality of transmission paths, a method for data transmission configuration is provided. The network device sends the first transmission configuration to the terminal, the first transmission configuration indicates the transmission paths of the data of the bearer, and the transmission paths include at least two transmission paths. Therefore, transmission of the data of the bearer of the terminal on at least two transmission paths is supported, which may improve the reliability of data transmission.

The at least two transmission paths may include a direct link in which the terminal is directly connected to the network device, and an indirect link in which the terminal is connected to the network device via a relay terminal. Therefore, the data of the bearer of the terminal may be transmitted via both the direct link and the indirect link, which may improve the reliability of data transmission.

In order to improve the reliability of data transmission, the network device may configure a plurality of transmission paths for a radio bearer of the terminal, and configure a plurality of RLC entities for data from a certain package data convergence protocol (PDCP) entity. The transmission path may be determined via a cell group (a master cell group (MCG) or a secondary cell group (SCG)) and a logical channel identifier.

The above configurations of the network device may be carried in PDCP-Config and is indicated by moreThanOneRLC and moreThanTwoRLC-DRB-r16.

Configuration information of the PDCP-Config is as follows:
The IE PDCP-Config is used to set the configurable PDCP parameters for signalling, MBS multicast and data radio bearers.
PDCP-Config information element

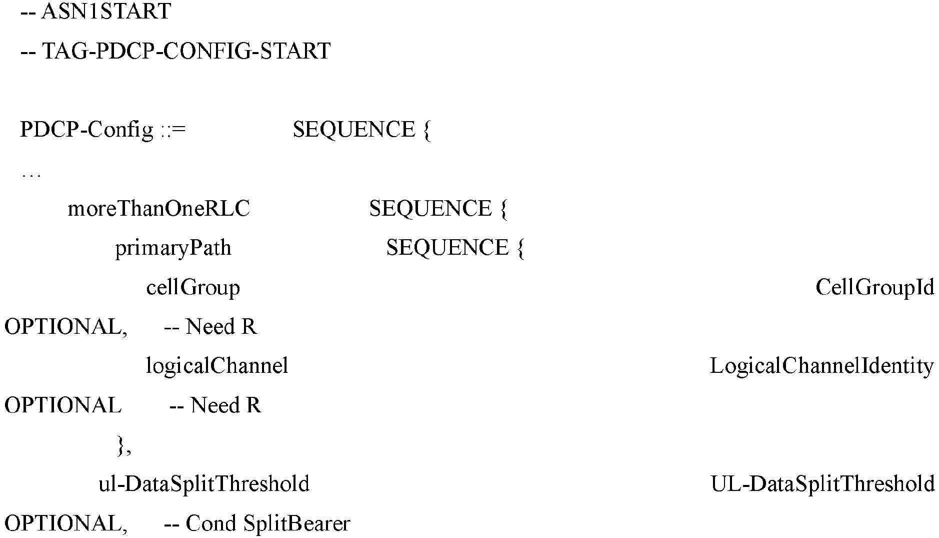

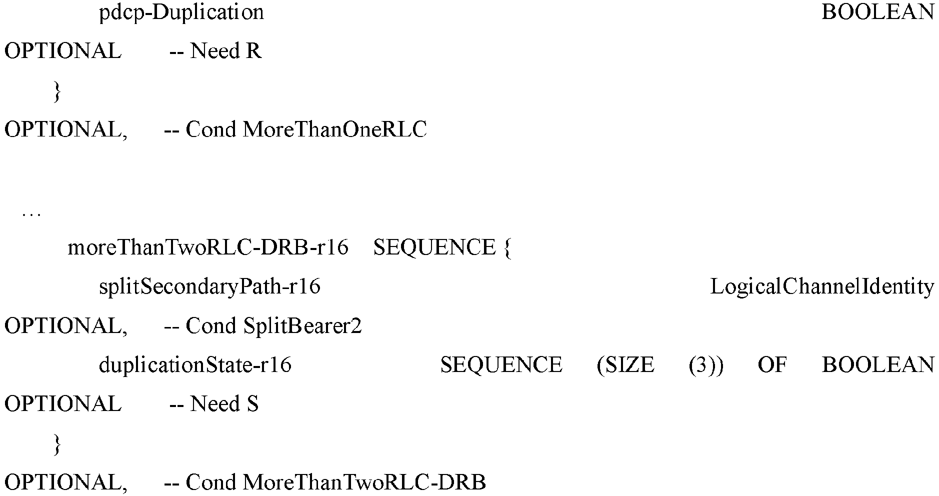

In an embodiment of the present invention, the terminal receives the first transmission configuration sent by the network device, the first transmission configuration indicates the transmission paths of the data of the bearer, and the transmission paths include at least two transmission paths. The transmission paths include the direct link in which the terminal is directly connected to the network device, and the indirect link in which the terminal is connected to the network device via the relay terminal. Therefore, the terminal supports repeated transmissions of the data of the bearer on the plurality of transmission paths, and may also transmit the data on the direct link and the indirect link at the same time, which may improve the reliability of data transmission.

In some embodiments, the bearer is a data radio bearer (DRB) and/or a signaling radio bearer (SRB).

In an embodiment of the present invention, the first transmission configuration indicates at least two transmission paths of data of the DRB, or the first transmission configuration indicates at least two transmission paths of data of the SRB.

The first transmission configuration indicates at least two transmission paths of the data of the DRB, and the data transmitted in the at least two transmission paths come from the same DRB, which are repeated transmissions. The first transmission configuration indicates at least two transmission paths of the data of the SRB, and the data transmitted in the at least two transmission paths come from the same SRB, which are repeated transmissions.

In some embodiments, the transmission paths include at least one of: a sidelink relay; or a universal UE to network interface (Uu).

The network device sends the first transmission configuration to the terminal, the first transmission configuration indicates the transmission paths of the data of the bearer, the transmission paths include at least two transmission paths, and at least the sidelink relay and the Uu are included.

The sidelink relay may be an indirect link in which the terminal is connected to the network device via the relay terminal, and the Uu is a direct link in which the terminal is directly connected to the network device without via the relay terminal.

In an embodiment of the present invention, the terminal and the network device may communicate via a direct link of a communication interface. For example, the communication interface between the terminal and the network device may be the Uu. Therefore, the communication via the direct link between the terminal and the network device may also be called the Uu. The Uu also includes an uplink communication and a downlink communication.

In an embodiment of the present invention, the data of the bearer of the terminal may be repeatedly transmitted via the sidelink relay and the Uu at the same time, thereby improving the reliability of data transmission.

In some embodiments, the transmission path is the Uu, and the terminal determines the transmission path by at least one of: a cell group; a cell identifier; a logical channel identifier; or a radio link control (RLC) identifier.

In an embodiment of the present invention, the network device sends the first transmission configuration to the terminal, the first transmission configuration indicates the transmission paths of the data of the bearer, and the transmission paths include at least two transmission paths.

The terminal may determine the transmission path according to the cell group in a case where the transmission path is the Uu. The cell group includes a master cell group and a secondary cell group.

The terminal may determine the transmission path according to the cell identifier in a case where the transmission path is the Uu.

The terminal may determine the transmission path according to the logical channel identifier in a case where the transmission path is the Uu.

The terminal may determine the transmission path according to the radio link control (RLC) identifier in a case where the transmission path is the Uu.

It should be noted that the above embodiments are not exhaustive but are only illustrations of some embodiments, and the above embodiments may be implemented individually or in combination. The above embodiments are only for illustration and are not intended as specific limitations on the scope of protection of embodiments of the present invention.

In some embodiments, the transmission path is the sidelink relay, and the terminal determines the transmission path by at least one of: a relay terminal identifier; a sidelink logical channel identifier; or a sidelink RLC identifier.

In an embodiment of the present invention, the network device sends the first transmission configuration to the terminal, the first transmission configuration indicates the transmission paths of the data of the bearer, and the transmission paths include at least two transmission paths.

The terminal may determine the transmission path according to the relay terminal identifier in a case where the transmission path is the sidelink relay. The relay terminal identifier may be a layer 2 identifier of the relay terminal, or the relay terminal identifier may be an index, indicating the relay terminal at an index position according to an ascending or descending order of the layer 2 identifier of the relay terminal to which the terminal is connected.

The terminal may determine the transmission path according to the sidelink logical channel identifier in a case where the transmission path is the sidelink relay.

The terminal may determine the transmission path according to the sidelink RLC identifier in a case where the transmission path is the sidelink relay.

It should be noted that the above embodiments are not exhaustive but are only illustrations of some embodiments, and the above embodiments may be implemented individually or in combination. The above embodiments are only for illustration and are not intended as specific limitations on the scope of protection of embodiments of the present invention.

In some embodiments, the terminal receives the first transmission configuration sent by the network device, the first transmission configuration indicates the transmission paths of the data of the bearer, and the transmission paths include at least two transmission paths. The terminal transmits the data of the bearer via the transmission paths according to the first transmission configuration.

In an embodiment of the present invention, the network device sends the first transmission configuration to the terminal, the first transmission configuration indicates the transmission paths of the data of the bearer, and the transmission paths include at least two transmission paths. After the terminal receives the first transmission configuration sent by the network device, the terminal may determine at least two transmission paths of the data of the bearer according to the first transmission configuration. Based on this, the data of the bearer may be transmitted via the at least two transmission paths determined, or the data of the bearer may be transmitted via one of the at least two transmission paths determined, etc.

Therefore, in embodiments of the present invention, the terminal may transmit the data of the bearer via a plurality of transmission paths, which may improve the reliability of data transmission.

In some embodiments, the transmission paths include a primary transmission path and a secondary transmission path, and transmitting the data of the bearer via the transmission paths according to the first repeated transmission configuration includes: transmitting the data of the bearer via the primary transmission path according to the first transmission configuration.

In an embodiment of the present invention, the network device sends the first transmission configuration to the terminal, the first transmission configuration indicates the transmission paths of the data of the bearer, and the transmission paths include at least two transmission paths. After the terminal receives the first transmission configuration sent by the network device, the terminal may determine at least two transmission paths of the data of the bearer according to the first transmission configuration, and the at least two transmission paths include the primary transmission path and the secondary transmission path. Based on this, the terminal may transmit the data of the bearer via the primary transmission path according to the first transmission configuration, thereby improving the reliability of data transmission.

Among the at least two transmission paths, the primary transmission path and the secondary transmission path may be set as needed, for example, it may be stipulated through a protocol that one of the at least two transmission paths is the primary transmission path, and the other transmission path is used as the secondary transmission path, or it may be configured by the network device that one of the at least two transmission paths is the primary transmission path, and the other transmission path is used as the secondary transmission path.

Of course, the above examples are for illustration only. Among the at least two transmission paths, the primary transmission path and the secondary transmission path may be determined according to a protocol or a configuration of the network device, or one of the primary transmission path and the secondary transmission path may be determined according to a protocol or a configuration of network device, and the other one may be automatically determined, which will not be specifically limited in embodiments of the present invention.

In a case where the transmission paths include three or more transmission paths, there may exist one primary transmission path and a plurality of secondary transmission paths. The primary transmission path may be determined according to a protocol or a configuration of the network device, and the other transmission paths are the secondary transmission paths.

In some embodiments, the network device sends first indication information to the terminal sent, and the first indication information indicates activation or deactivation of the transmission paths of the bearer.

In an embodiment of the present invention, the terminal receives the first indication information sent by the network device, and the first indication information indicates activation or deactivation of the transmission paths of the bearer. The first indication information indicates activated transmission path(s) of the bearer, or the first indication information indicates deactivated transmission path(s) of the bearer.

In some embodiments, the terminal transmits the data of the bearer via the transmission path(s) in an activated state.

In an embodiment of the present invention, on the basis that the first indication information indicates the activated transmission path(s) of the bearer, the terminal may transmit the data of the bearer via the transmission path(s) in the activated state.

In some embodiments, the first indication information is carried in at least one of: a medium access control control element (MAC CE); a radio resource control (RRC) message; a package data convergence protocol (PDCP) control protocol data unit (PDU); a sidelink MAC CE; or a sidelink RRC message.

In an embodiment of the present invention, the network device sends the first indication information to the terminal, which may be that the network device sends the MAC CE to the terminal, and the MAC CE carries the first indication information.

In an embodiment of the present invention, the network device sends the first indication information to the terminal, which may be that the network device sends the RRC message to the terminal, and the RRC message carries the first indication information.

In an embodiment of the present invention, the network device sends the first indication information to the terminal, which may be that the network device sends the PDCP control PDU to the terminal, and the PDCP control PDU carries the first indication information.

In an embodiment of the present invention, the network device sends the first indication information to the terminal, which may be that the network device sends the sidelink MAC CE to the terminal, and the sidelink MAC CE carries the first indication information.

In an embodiment of the present invention, the network device sends the first indication information to the terminal, which may be that the network device sends the sidelink RRC message to the terminal, and the sidelink RRC message carries the first indication information.

It should be noted that the above embodiments are not exhaustive but are only illustrations of some embodiments, and the above embodiments may be implemented individually or in combination. The above embodiments are only for illustration and are not intended as specific limitations on the scope of protection of embodiments of the present invention.

In some embodiments, the first indication information includes at least one of: a bearer identifier; a transmission path activation indication; or a transmission path deactivation indication.

In an embodiment of the present invention, the network device sends the first indication information to the terminal, and the first indication information indicates activation or deactivation of the transmission paths of the bearer. The bearer identifier may be sent to the terminal to indicate an activated or deactivated bearer.

In an embodiment of the present invention, the network device sends the first indication information to the terminal, and the first indication information indicates activation or deactivation of the transmission paths of the bearer. The transmission path activation indication may be sent to the terminal to indicate activation of the transmission path(s) of the bearer.

In an embodiment of the present invention, the network device sends the first indication information to the terminal, and the first indication information indicates activation or deactivation of the transmission paths of the bearer. The transmission path deactivation indication may be sent to the terminal to indicate deactivation of the transmission path(s) of the bearer.

In an embodiment of the present invention, the network device sends the first indication information to the terminal, and the first indication information indicates activation or deactivation of the transmission paths of the bearer. The bearer identifier and the transmission path activation indication may be sent to the terminal to indicate activated transmission path(s) of the bearer.

In an embodiment of the present invention, the network device sends the first indication information to the terminal, and the first indication information indicates activation or deactivation of the transmission paths of the bearer. The bearer identifier and the transmission path deactivation indication may be sent to the terminal to indicate deactivated transmission path(s) of the bearer.

The first indication information may include a bitmap, where positions of bits correspond to transmission paths one by one, a bit at a corresponding position indicates activation or deactivation, and the corresponding relationship between positions of bits and transmission paths may be the sidelink relay first and then the Uu, or vice versa. In a case where there are a plurality of logical channels or RLC channels in any path, they are arranged in an ascending or descending order of identifiers of the logical channels or the RLC channels.

It should be noted that the above embodiments are not exhaustive but are only illustrations of some embodiments, and the above embodiments may be implemented individually or in combination. The above embodiments are only for illustration and are not intended as specific limitations on the scope of protection of embodiments of the present invention.

In some embodiments, the first transmission configuration includes an activation state indication, and the activation state indication indicates the transmission path(s) in an activated state.

In an embodiment of the present invention, the first transmission configuration sent by the network device to the terminal further includes the activation state indication, and the activation state indication indicates the transmission path(s) in the activated state. The activation state indication may indicate that one of the at least two transmission paths is in the activated state. Based on this, the terminal receives the first transmission configuration sent by the network device and may determine the transmission path in the activated state.

In some embodiments, the data of the bearer is transmitted via the transmission path(s) in the activated state.

In an embodiment of the present invention, the terminal determines the transmission path(s) in the activated state according to the first transmission configuration sent by the network device, and may transmit the data of the bearer via the transmission path(s) in the activated state. Therefore, the terminal may determine the transmission paths of the data of the bearer, and transmit the data of the bearer on the transmission path(s) in the activated state, which may improve the reliability of data transmission.

In some embodiments, for the same bearer, the network device does not configure the first transmission configuration and a second transmission configuration at the same time. The second transmission configuration is configured to control the bearer to perform repeated transmissions on a plurality of RLCs of a cell group.

In an embodiment of the present invention, for the same bearer, the network device sends the first transmission configuration to the terminal, the first transmission configuration indicates the transmission paths of the data of the bearer, and the transmission paths include at least two transmission paths. In this case, the network device does not send the second transmission configuration to the terminal to instruct the bearer to perform repeated transmissions on a plurality of RLCs of the cell group.

Illustratively, for the same bearer, in a case where the bearer is the DRB, the network device sends the first transmission configuration to the terminal, and the first transmission configuration indicates transmission paths of data of the DRB. At this time, the terminal already can determine the transmission paths of the data of the DRB according to the first transmission configuration. In this case, the network device does not send the second transmission configuration to the terminal, and the second transmission configuration indicates repeated transmissions of the data of the DRB on a plurality of RLCs of the cell group.

It may be understood that, for the same bearer, in a case where the network device sends the first transmission configuration to the terminal, the network device does not send the second transmission configuration to the terminal. That is, for the same bearer, the first transmission configuration and the second transmission configuration are not sent to the terminal at the same time, to avoid indicating repeated transmission paths and avoid errors in data transmission.

Referring to FIG. 8, FIG. 8 is a flow chart of yet another method for data transmission configuration according to an embodiment of the present invention.

As shown in FIG. 8, the method is performed by a network device and may include, but is not limited to, a following step.

In S81, a first transmission configuration is sent to a terminal. The first transmission configuration indicates transmission paths of data of a bearer, and the transmission paths include at least two transmission paths. The first transmission configuration includes an activation state indication, and the activation state indication indicates the transmission path(s) in an activated state.

In embodiments of the present invention, the relevant description of S81 may refer to the relevant description in the above embodiments, which will not be repeated here.

In an embodiment of the present invention, the first transmission configuration sent by the network device to the terminal further includes the activation state indication, and the activation state indication indicates the transmission path(s) in the activated state. The activation state indication may indicate that one of the at least two transmission paths is in the activated state. Based on this, the terminal receives the first transmission configuration sent by the network device and may determine the transmission path in the activated state.

In some embodiments, the data of the bearer is transmitted via the transmission path(s) in the activated state.

In an embodiment of the present invention, the terminal determines the transmission path(s) in the activated state according to the first transmission configuration sent by the network device, and may transmit the data of the bearer via the transmission path(s) in the activated state. Therefore, the terminal may determine the transmission paths of the data of the bearer, and transmit the data of the bearer on the transmission paths, which may improve the reliability of data transmission.

It should be noted that, in embodiments of the present invention, S81 may be implemented separately or in combination with any other steps in embodiments of the present invention, for example, in combination with S71 in embodiments of the present invention, which is not limited in embodiments of the present invention.

By implementing embodiments of the present invention, the network device sends the first transmission configuration to the terminal, the first transmission configuration indicates the transmission paths of the data of the bearer, and the transmission paths include at least two transmission paths. The first transmission configuration includes the activation state indication, and the activation state indication indicates the transmission path(s) in the activated state. Therefore, the terminal may transmit the data of the bearer via a plurality of transmission paths, and transmits the data of the bearer on the transmission path(s) in the activated state, which may improve the reliability of data transmission.

Referring to FIG. 9, FIG. 9 is a flow chart of yet another method for data transmission configuration according to an embodiment of the present invention.

As shown in FIG. 9, the method is performed by a network device and may include, but is not limited to, the following steps.

In S91, a first transmission configuration is sent to a terminal. The first transmission configuration indicates transmission paths of data of a bearer, and the transmission paths include at least two transmission paths.

In embodiments of the present invention, the relevant description of S91 may refer to the relevant description in the above embodiments, which will not be repeated here.

In S92, first indication information is sent to the terminal. The first indication information indicates activation or deactivation of the transmission paths of the bearer.

In an embodiment of the present invention, the terminal receives the first indication information sent by the network device, and the first indication information indicates activation or deactivation of the transmission paths of the bearer. The first indication information indicates activated transmission path(s) of the bearer, or the first indication information indicates deactivated transmission path(s) of the bearer.

In some embodiments, the terminal transmits the data of the bearer via the transmission path(s) in an activated state.

In an embodiment of the present invention, on the basis that the first indication information indicates the activated transmission path(s) of the bearer, the terminal may transmit the data of the bearer via the transmission path(s) in the activated state.

In some embodiments, the first indication information is carried in at least one of: a medium access control control element (MAC CE); a radio resource control (RRC) message; a package data convergence protocol (PDCP) control PDU; a sidelink MAC CE; or a sidelink RRC message.

In an embodiment of the present invention, the network device sends the first indication information to the terminal, which may be that the network device sends the MAC CE to the terminal, and the MAC CE carries the first indication information.

In an embodiment of the present invention, the network device sends the first indication information to the terminal, which may be that the network device sends the RRC message to the terminal, and the RRC message carries the first indication information.

In an embodiment of the present invention, the network device sends the first indication information to the terminal, which may be that the network device sends the PDCP control PDU to the terminal, and the PDCP control PDU carries the first indication information.

In an embodiment of the present invention, the network device sends the first indication information to the terminal, which may be that the network device sends the sidelink MAC CE to the terminal, and the sidelink MAC CE carries the first indication information.

In an embodiment of the present invention, the network device sends the first indication information to the terminal, which may be that the network device sends the sidelink RRC message to the terminal, and the sidelink RRC message carries the first indication information.

It should be noted that the above embodiments are not exhaustive but are only illustrations of some embodiments, and the above embodiments may be implemented individually or in combination. The above embodiments are only for illustration and are not intended as specific limitations on the scope of protection of embodiments of the present invention.

In some embodiments, the first indication information includes at least one of: a bearer identifier; a transmission path activation indication; or a transmission path deactivation indication.

In an embodiment of the present invention, the network device sends the first indication information to the terminal, and the first indication information indicates activation or deactivation of the transmission paths of the bearer. The bearer identifier may be sent to the terminal to indicate an activated or deactivated bearer.

In an embodiment of the present invention, the network device sends the first indication information to the terminal, and the first indication information indicates activation or deactivation of the transmission paths of the bearer. The transmission path activation indication may be sent to the terminal to indicate activation of the transmission path(s) of the bearer.

In an embodiment of the present invention, the network device sends the first indication information to the terminal, and the first indication information indicates activation or deactivation of the transmission paths of the bearer. The transmission path deactivation indication may be sent to the terminal to indicate deactivation of the transmission path(s) of the bearer.

In an embodiment of the present invention, the network device sends the first indication information to the terminal, and the first indication information indicates activation or deactivation of the transmission paths of the bearer. The bearer identifier and the transmission path activation indication may be sent to the terminal to indicate activated transmission path(s) of the bearer.

In an embodiment of the present invention, the network device sends the first indication information to the terminal, and the first indication information indicates activation or deactivation of the transmission paths of the bearer. The bearer identifier and the transmission path deactivation indication may be sent to the terminal to indicate deactivated transmission path(s) of the bearer.

The first indication information may include a bitmap, where positions of bits correspond to transmission paths one by one, a bit at a corresponding position indicates activation or deactivation, and the corresponding relationship between positions of bits and transmission paths may be the sidelink relay first and then the Uu, or vice versa. In a case where there are a plurality of logical channels or RLC channels in any path, they are arranged in an ascending or descending order of identifiers of the logical channels or the RLC channels.

It should be noted that the above embodiments are not exhaustive but are only illustrations of some embodiments, and the above embodiments may be implemented individually or in combination. The above embodiments are only for illustration and are not intended as specific limitations on the scope of protection of embodiments of the present invention.

It should be noted that, in embodiments of the present invention, S91 may be implemented separately or in combination with any other steps in embodiments of the present invention, for example, in combination with S71 in embodiments of the present invention, which is not limited in embodiments of the present invention.

By implementing embodiments of the present invention, the network device sends the first transmission configuration to the terminal, the first transmission configuration indicates the transmission paths of the data of the bearer, and the transmission paths include at least two transmission paths. The network device sends the first indication information to the terminal, and the first indication information indicates activation or deactivation of the transmission paths of the bearer. Therefore, the terminal may transmit the data of the bearer via the plurality of transmission paths, and transmit the data of the bearer on the transmission path(s) in the activated state, which may improve the reliability of data transmission.

In the above embodiments provided in the present invention, the methods provided in the embodiments of the present invention are introduced from the perspectives of the terminal and the network device, respectively. In order to implement the various functions in the above-mentioned methods provided in the embodiments of the present invention, the terminal and the network device may include a hardware structure and a software module to implement the above-mentioned various functions in the form of the hardware structure, the software module, or the hardware structure plus the software module. A certain one of the above functions may be implemented in the form of the hardware structure, the software module, or the hardware structure plus the software module.

Referring to FIG. 10, FIG. 10 is a schematic block diagram of a communication device 1 according to an embodiment of the present invention. The communication device 1 shown in FIG. 10 may include a transceiver module 11 and a processing module. The transceiver module may include a sending module and/or a receiving module. The sending module is used to implement a sending function, and the receiving module is used to implement a receiving function. The transceiver module may implement a sending function and/or a receiving function.

The communication device 1 may be a terminal, a device in a terminal, or a device that may be used in cooperation with a terminal. Alternatively, the communication device 1 may be a network device, a device in a network device, or a device that may be used in cooperation with a network device.

The communication device 1 is a terminal:
The device includes: a transceiver module 11.

The transceiver module 11 is configured to receive a first transmission configuration sent by a network device. The first transmission configuration indicates transmission paths of data of a bearer, and the transmission paths include at least two transmission paths.

In some embodiments, the bearer is a data radio bearer (DRB) and/or a signaling radio bearer (SRB).

In some embodiments, the transmission paths include at least one of: a sidelink relay; or a Uu.

In some embodiments, in a case where the transmission path is the Uu, the transmission path is determined by at least one of: a cell group; a cell identifier; a logical channel identifier; or a radio link control (RLC) identifier.

In some embodiments, in a case where the transmission path is the sidelink relay, the transmission path is determined by at least one of: a relay terminal identifier; a sidelink logical channel identifier; or a sidelink RLC identifier.

In some embodiments, the transceiver module 11 is further configured to transmit the data of the bearer via the transmission paths according to the first transmission configuration.

In some embodiments, the transmission paths include a primary transmission path and a secondary transmission path, and the transceiver module 11 is further configured to transmit the data of the bearer via the primary transmission path according to the first transmission configuration.

In some embodiments, the transceiver module 11 is further configured to receive first indication information sent by the network device. The first indication information indicates activation or deactivation of the transmission paths of the bearer.

In some embodiments, the first indication information is carried in at least one of: a medium access control control element (MAC CE); a radio resource control (RRC) message; a package data convergence protocol (PDCP) control PDU; a sidelink MAC CE; or a sidelink RRC message.

In some embodiments, the first indication information includes at least one of: a bearer identifier; a transmission path activation indication; or a transmission path deactivation indication.

In some embodiments, the first transmission configuration includes an activation state indication, and the activation state indication indicates the transmission path(s) in an activated state.

In some embodiments, the transceiver module 11 is further configured to transmit the data of the bearer via the transmission path(s) in an activated state.

The communication device 1 is a network device:
The device includes: a transceiver module 11.

The transceiver module 11 is configured to send a first transmission configuration to a terminal. The first transmission configuration indicates transmission paths of data of a bearer, and the transmission paths include at least two transmission paths.

In some embodiments, the bearer is a data radio bearer (DRB) and/or a signaling radio bearer (SRB).

In some embodiments, the transmission paths include at least one of: a sidelink relay; or a Uu.

In some embodiments, the transceiver module 11 is further configured to send first indication information to the terminal. The first indication information indicates activation or deactivation of the transmission paths of the bearer.

In some embodiments, the first indication information is carried in at least one of: a medium access control control element (MAC CE); a radio resource control (RRC) message; a package data convergence protocol (PDCP) control PDU; a sidelink MAC CE; or a sidelink RRC message.

In some embodiments, the first indication information includes at least one of: a bearer identifier; a transmission path activation indication; or a transmission path deactivation indication.

In some embodiments, the first transmission configuration includes an activation state indication, and the activation state indication indicates the transmission path(s) in an activated state.

In some embodiments, for the same bearer, the network device does not configure the first transmission configuration and a second transmission configuration at the same time. The second transmission configuration is configured to control the bearer to perform repeated transmissions on a plurality of RLCs of a cell group.

Regarding the communication device 1 in the above embodiments, the specific manner in which each module performs operations has been described in detail in embodiments of the related methods, and will not be elaborated here.

The communication device 1 provided in the above embodiments of the present invention achieves the same or similar beneficial effects as the method for data transmission configurations provided in some embodiments above, which will not be repeated here.

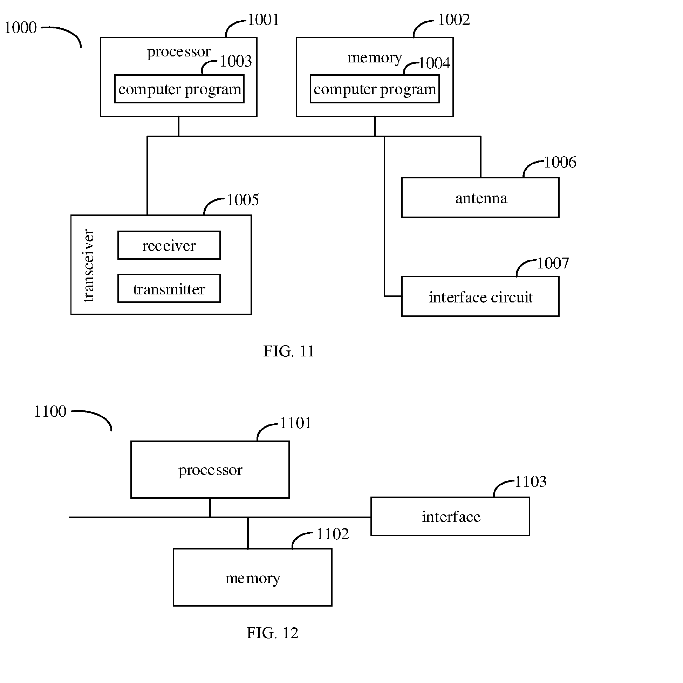

Referring to FIG. 11, which is a schematic block diagram of another communication device 1000 according to an embodiment of the present invention, the communication device 1000 may be a network device, may also be a terminal, may also be a chip, a chip system, or a processor that supports the network device to implement the above methods, and may also be a chip, a chip system, or a processor that supports the terminal to implement the above methods. The communication device 1000 may be configured to implement the methods as described in the above method embodiments, and for details, reference may be made to the descriptions in the above method embodiments.

The communications device 1000 may include one or more processors 1001. The processor 1001 may be a general-purpose processor or a special-purpose processor. For example, it may be a baseband processor or a central processing unit. The baseband processor may be configured to process a communication protocol and communication data, and the central processing unit may be configured to control a communication device (such as a network device, a baseband chip, the terminal, a terminal chip, a DU or a CU, etc.), execute computer programs, and process data of computer programs.

Optionally, the communication device 1000 may further include one or more memories 1002 having stored therein a computer program 1004. The memory 1002 executes the computer program 1004, to cause the communication device 1000 to implement the methods as described in the above method embodiments. Optionally, the memory 1002 may have stored therein data. The communication device 1000 and the memory 1002 may be provided separately or integrated together.

Optionally, the communication device 1000 may further include a transceiver 1005 and an antenna 1006. The transceiver 1005 may be called a transceiver element, a transceiver machine, a transceiver circuit or the like, for implementing a transceiver function. The transceiver 1005 may include a receiver and a transmitter. The receiver may be called a receiving machine, a receiving circuit or the like, for implementing a receiving function. The transmitter may be called a sending machine, a sending circuit or the like, for implementing a sending function.

Optionally, the communication device 1000 may further include one or more interface circuits 1007. The interface circuit 1007 is configured to receive a code instruction and transmit the code instruction to the processor 1001. The processor 1001 runs the code instruction to enable the communication device 1000 to execute the methods as described in the foregoing method embodiments.

The communication device 1000 is a first terminal: the transceiver 1005 is configured to execute S21 in FIG. 2; S31 and S32 in FIG. 3; S41 and S42 in FIG. 4; S51 and S52 in FIG. 5; and S61 and S62 in FIG. 6.

The communication device 1000 is a network device: the transceiver 1005 is configured to execute S71 in FIG. 7; S81 in FIG. 8; and S91 and S92 in FIG. 9.

In an implementation manner, the processor 1001 may include the transceiver configured to implement receiving and sending functions. For example, the transceiver may be a transceiver circuit, an interface, or an interface circuit. The transceiver circuit, the interface or the interface circuit configured to implement the receiving and sending functions may be separated or may be integrated together. The above transceiver circuit, interface or interface circuit may be configured to read or write codes/data, or the above transceiver circuit, interface or interface circuit may be configured to transmit or transfer signals.

In an implementation manner, the processor 1001 may have stored therein a computer program 1003 that, when run on the processor 1001, causes the communication device 1000 to implement the methods as described in the foregoing method embodiments. The computer program 1003 may be embedded in the processor 1001, and in this case, the processor 1001 may be implemented by a hardware.

In an implementation manner, the communication device 1000 may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), a negative metal-oxide-semiconductor (also called nMetal-oxide-semiconductor, NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be the terminal, but the scope of the communication device described in the present invention is not limited thereto, and a structure of the communication device is not limited by FIG. 11. The communication device may be a stand-alone device or may be a part of a larger device. For example, the communication device may be: (1) a stand-alone integrated circuit (IC), or a chip, or a chip system or subsystem; (2) a set of one or more ICs, optionally, the set of ICs may also include a storage component for storing data and computer programs; (3) an ASIC, such as a modem; (4) a module that may be embedded in other devices; (5) a receiver, a terminal, an intelligent terminal, a cellular phone, a wireless device, a handheld machine, a mobile unit, a vehicle device, a network device, a cloud device, an artificial intelligence device, etc.; (6) others.

For the case where the communication device may be a chip or a chip system, referring to FIG. 12, FIG. 12 is a block diagram of a chip according to an embodiment of the present invention.

The chip 1100 includes a processor 1101 and an interface 1103. One or more processors 1101 may be provided, and a plurality of interfaces 1103 may be provided.

For the case where the chip is used to implement functions of the network device in embodiments of the present invention:
The interface 1103 is configured to receive code instructions and transmit the code instructions to the processor.

The processor 1101 is configured to run the code instructions to perform the method for data transmission configuration according to some of the above embodiments.

For the case where the chip is used to implement functions of the terminal in embodiments of the present invention:
The interface 1103 is configured to receive code instructions and transmit the code instructions to the processor.

The processor 1101 is configured to run the code instructions to perform the method for data transmission configuration according to some of the above embodiments.

Optionally, the chip 1100 further includes a memory 1102 for storing necessary computer programs and data.

Those skilled in the art may also understand that various illustrative logical blocks and steps listed in embodiments of the present invention may be implemented by electronic hardware, computer software, or a combination thereof. Whether such functions are implemented by hardware or software depends on specific applications and design requirements of an overall system. For each specific application, those skilled in the art may use various methods to implement the described functions, but such an implementation should not be understood as beyond the protection scope of embodiments of the present invention.

Embodiments of the present invention also provide a system for data transmission configuration. The system includes the communication device as the terminal and the communication device as the network device as described in the aforementioned embodiments with reference to FIG. 10, or the system includes the communication device as the terminal and the communication device as the network device as described in the aforementioned embodiments with reference to FIG. 11.

The present invention also provides a readable storage medium having stored thereon instructions that, when executed by a computer, cause functions of any of the above method embodiments to be implemented.

The present invention also provides a computer program product that, when executed by a computer, causes functions of any of the above method embodiments to be implemented.

The above embodiments may be implemented in whole or in part by software, hardware, firmware or any combination thereof. When implemented using the software, the above embodiments may be implemented in whole or in part in a form of the computer program product. The computer program product includes one or more computer programs. When the computer program is loaded and executed on the computer, all or some of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line (DSL)) or a wireless manner (such as infrared, wireless, or via microwave, etc.). The computer-readable storage medium may be any available medium that can be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

Those of ordinary skill in the art can understand that the first, second, and other numeral numbers involved in the present invention are distinguished only for convenience of description, and are not intended to limit the scope of embodiments of the present invention, and nor are they intended to represent sequential order.

The term "at least one" used in the present invention may also be described as one or more, and the term "a plurality of" may cover two, three, four or more, which are not limited in the present invention. In embodiments of the present invention, for a certain kind of technical feature, the technical features in this kind of technical feature are distinguished by term like "first", "second", "third", "A", "B", "C" and "D", etc., and these technical features described with the "first", "second", "third", "A", "B", "C" and "D" have no order of priority and have no order of size.

The correspondence shown in each table in the present invention may be configured or predefined. The values of information in each table are just examples, and may be configured as other values, which are not limited in the present invention. When configuring a correspondence between the information and various parameters, it is not necessary to configure all the correspondences shown in the tables. For example, the correspondences shown in some rows of the tables in the present invention may not be configured. For another example, appropriate variations or adjustments (such as splitting, merging, and so on) can be made based on the above table. The names of parameters shown in the titles of the above tables may also adopt other names understandable in the communication device, and the values or representations of the parameters may also be other values or representations understandable in the communication device. When the above tables are implemented, other data structures may also be used, for example, arrays, queues, containers, stacks, linear tables, pointers, linked lists, trees, graphs, structural bodies, classes, heaps, or hash tables may be used.

The term "predefinition" in the present invention may be understood as definition, predefinition, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such an implementation should not be considered as beyond the scope of the present invention.

Those skilled in the art can clearly understand that for the convenience and brevity of the description, regarding the specific working process of the above-described system, device and unit, reference may be made to the corresponding process in the foregoing method embodiments, which will not be repeated here.

The above only describes some specific implementations of the present invention, but the protection scope of the present invention is not limited thereto. Any changes or substitutions that are conceivable to those skilled in the art within the technical scope of the present invention should fall within the protection scope of the present invention. Therefore, the protection scope of the present invention should be determined by the protection scope of the claims.

## Claims

1. A method for data transmission configuration, performed by a terminal, comprising:
receiving a first transmission configuration sent by a network device, wherein the first transmission configuration indicates transmission paths of data of a bearer, and the transmission paths comprise at least two transmission paths.

2. The method according to claim 1, wherein the bearer is a data radio bearer (DRB) and/or a signaling radio bearer (SRB).

3. The method according to claim 1 or 2, wherein the transmission paths comprise at least one of:
a sidelink relay; or
a universal user equipment (UE) to network interface (Uu).

4. The method according to claim 3, wherein in a case where the transmission path is the Uu, the transmission path is determined by at least one of:
a cell group;
a cell identifier;
a logical channel identifier; or
a radio link control (RLC) identifier.

5. The method according to claim 3, wherein in a case where the transmission path is the sidelink relay, the transmission path is determined by at least one of:
a relay terminal identifier;
a sidelink logical channel identifier; or
a sidelink RLC identifier.

6. The method according to any one of claims 1 to 5, further comprising:
transmitting the data of the bearer via the transmission paths according to the first transmission configuration.

7. The method according to claim 6, wherein the transmission paths comprise a primary transmission path and a secondary transmission path, and transmitting the data of the bearer via the transmission paths according to the first repeated transmission configuration comprises:
transmitting the data of the bearer via the primary transmission path according to the first transmission configuration.

8. The method according to any one of claims 1 to 5, further comprising:
receiving first indication information sent by the network device, wherein the first indication information indicates activation or deactivation of the transmission paths of the bearer.

9. The method according to claim 8, wherein the first indication information is carried in at least one of:
a medium access control control element (MAC CE);
a radio resource control (RRC) message;
a package data convergence protocol (PDCP) control protocol data unit (PDU);
a sidelink MAC CE; or
a sidelink RRC message.

10. The method according to claim 8 or 9, wherein the first indication information comprises at least one of:
a bearer identifier;
a transmission path activation indication; or
a transmission path deactivation indication.

11. The method according to any one of claims 1 to 5, wherein the first transmission configuration comprises an activation state indication, and the activation state indication indicates transmission path(s) in an activated state.

12. The method according to any one of claims 8 to 11, further comprising:
transmitting the data of the bearer via the transmission path(s) in an activated state.

13. A method for data transmission configuration, performed by a network device, comprising:
sending a first transmission configuration to a terminal, wherein the first transmission configuration indicates transmission paths of data of a bearer, and the transmission paths comprise at least two transmission paths.

14. The method according to claim 13, wherein the bearer is a data radio bearer (DRB) and/or a signaling radio bearer (SRB).

15. The method according to claim 13 or 14, wherein the transmission paths comprise at least one of:
a sidelink relay; or
a Uu.

16. The method according to any one of claims 13 to 15, further comprising:
sending first indication information to the terminal, wherein the first indication information indicates activation or deactivation of the transmission paths of the bearer.

17. The method according to claim 16, wherein the first indication information is carried in at least one of:
a medium access control control element (MAC CE);
a radio resource control (RRC) message;
a package data convergence protocol (PDCP) control protocol data unit (PDU);
a sidelink MAC CE; or
a sidelink RRC message.

18. The method according to claim 16 or 17, wherein the first indication information comprises at least one of:
a bearer identifier;
a transmission path activation indication; or
a transmission path deactivation indication.

19. The method according to any one of claims 13 to 15, wherein the first transmission configuration comprises an activation state indication, and the activation state indication indicates transmission path(s) in an activated state.

20. The method according to any one of claims 13 to 19, wherein for the same bearer, the network device does not configure the first transmission configuration and a second transmission configuration at the same time, wherein the second transmission configuration is configured to control the bearer to perform repeated transmissions on a plurality of RLCs of a cell group.

21. A communication device, comprising:
a transceiver module configured to receive a first transmission configuration sent by a network device, wherein the first transmission configuration indicates transmission paths of data of a bearer, and the transmission paths comprise at least two transmission paths.

22. A communication device, comprising:
a transceiver module configured to send a first transmission configuration to a terminal, wherein the first transmission configuration indicates transmission paths of data of a bearer, and the transmission paths comprise at least two transmission paths.

23. A communication device, comprising:
a processor; and
a memory having stored therein a computer program,
wherein the processor, when executing the computer program in the memory, causes the device to perform the method according to any one of claims 1 to 12, or cause the device to perform the method according to any one of claims 13 to 20.

24. A communication device, comprising: a processor and an interface circuit;
wherein the interface circuit is configured to receive code instructions and transmit the code instructions to the processor; and
the processor is configured to run the code instructions to perform the method according to any one of claims 1 to 12, or is configured to run the code instructions to perform the method according to any one of claims 13 to 20.

25. A computer-readable storage medium having stored therein instructions that, when executed, cause the method according to any one of claims 1 to 12 to be implemented, or cause the method according to any one of claims 13 to 20 to be implemented.
